# EUROPÄISCHE PATENTSCHRIFT

(11) **EP 3 915 812 B1**
(45) Veröffentlichungstag und Bekanntmachung des Hinweises auf die Patenterteilung: **30.11.2022**
(21) Anmeldenummer: 21161053.0
(22) Anmeldetag: 05.03.2021
(51) Int. Cl.: B60G 17/019, B60G 11/27, B60G 11/28, F16F 9/04, F16F 9/05

(54) **LUFTFEDERANORDNUNG**
AIR SPRING ASSEMBLY
AGENCEMENT DE RESSORT PNEUMATIQUE

(30) Priorität: 28.05.2020 DE 102020206700
(43) Veröffentlichungstag der Anmeldung: 01.12.2021
(73) Patentinhaber: ContiTech Luftfedersysteme GmbH, 30165 Hannover (DE)
(72) Erfinder: Reck, Siegfried, 30419 Hannover (DE); Schulz, Tomas, 30419 Hannover (DE)
(74) Vertreter: Continental Corporation

(56) Entgegenhaltungen:
- EP-A1- 3 505 418
- EP-A1- 3 835 613
- WO-A1-2016/072843
- DE-A1-102012 108 684

## Beschreibung

Die vorliegende Erfindung betrifft eine Luftfederanordnung für ein Fahrzeug gemäß dem Oberbegriff des Patentanspruchs 1 sowie ein Fahrzeug mit einer derartigen Luftfederanordnung gemäß dem Patentanspruch 12.

Zur Federung bzw. Dämpfung von Schwingungen können verschiedene Arten von Feder- bzw. Dämpfersystemen verwendet werden. Hierzu gehören die mechanischen Federungen, bei denen üblicherweise ein elastisches Element zwischen zwei starren Elementen angeordnet ist. Als mechanische Federung kann die Kombination eines elastomeren Körpers wie z.B. eines Gummikörpers zwischen zwei Metallkörpern wie z.B. zwei Metallplatten verwendet werden.

Auch ist es bekannt, Schwingungen über Fluide, über Gase oder über Flüssigkeiten, zu dämpfen. Hierzu können hydraulische Flüssigkeiten sowie Luft verwendet werden. Bei einer Luftfederung wird dabei Luft innerhalb eines elastischen Balges sowie zwei starren Elementen angeordnet. Wird eine derartige Luftfeder bei Fahrzeugen wie z.B. Schienen- oder Straßenfahrzeugen, insbesondere bei Lastkraftwagen (Lkw), eingesetzt, so wirkt die Luft federnd in der Höhe entlang ihrer Längsachse bzw. Mittelachse zwischen dem Untergrund bzw. dem Fahrwerk des Fahrzeugs und dessen Aufbau wie z. B. Chassis, Ladefläche und dergleichen.

Für verschiedene technische Anwendung kann es dabei von Interesse sein, die Kräfte sensorisch zu erfassen, welche zwischen den starren Elementen der Federung wirken. Hieraus kann beispielsweise bei einem Lastkraftwagen das Gewicht der Beladung bestimmt werden, welches oberhalb eines der beiden starren Elemente angeordnet ist.

Eine derartige messtechnische Erfassung der Beladung eines Fahrzeugs kann beispielsweise erforderlich sein, um die EU-Richtlinie 2015/719 zu erfüllen, welche bis Mitte 2021 in Kraft treten soll. Gemäß dieser EU-Richtlinie sollen spezifische Maßnahmen ergriffen werden, um die im Betrieb befindlichen Fahrzeuge zu bestimmen, welche mutmaßlich überladen sind. Entsprechend soll eine Bestimmung der Beladung mithilfe von bordeigenen Messgeräten des Fahrzeugs erfolgen können.

Hierzu ist es bisher bekannt, dass bei luftgefederten Fahrzeugen die aktuellen Betriebsdrücke der einzelnen Luftfedern mit bordeigenen Messgeräten erfasst und aus den Betriebsdrücken aller Luftfedern die Traglast des Fahrzeugs berechnet wird. Dabei wird üblicherweise der sensorisch erfasste Balgdruck jeder Luftfeder mit einem zuvor kalibrierten individuellen Faktor der Luftfeder multipliziert und hierdurch die jeweilige Traglast bestimmt, welche dann auf alle Luftfedern umgerechnet wird.

Nachteilig ist hierbei, dass ein entsprechend hoher und möglichst genauer Kalibrieraufwand pro Luftfeder betrieben werden muss. Diese Kalibrierung ist ggfs. im Laufe der Zeit zu wiederholen, um Veränderungen der Luftfeder z.B. durch Materialermüdung zu berücksichtigen.

Nachteilig ist auch, dass bei der Bestimmung der Traglast der jeweilige Faktor für jede Luftfeder individuell zu verwenden ist. Dies stellt einen nicht unerheblichen Aufwand bei der Inbetriebnahme der Mess- bzw. Recheneinheit pro Fahrzeug dar.

Ferner kann dies auch eine Fehlerquelle bei der Inbetriebnahme an einem Fahrzeug darstellen.

Nachteilig ist ferner, dass die Tragkraft einer Luftfeder nicht ausschließlich von ihrem aktuellen Balgdruck abhängt. Vielmehr haben auch die Einbausituation der Luftfeder zwischen z.B. Fahrwerk und Chassis sowie die aktuelle Federhöhe der Luftfeder einen Einfluss auf die Tragkraft, welche gerade auf die Luftfeder wirkt. Daher kann das zuvor beschriebene Berechnungsverfahren zu einem falschen Berechnungsergebnis der Tragkraft bzw. der Beladung des Fahrzeugs führen, falls die Mittelachse bzw. die Längsachse des Kolbens der Luftfeder und die Bördelplatte der Luftfeder nicht miteinander fluchten.

Zu beachten ist ferner, dass der Zusammenhang zwischen dem Druck innerhalb des Balges der Luftfeder und der Tragkraft der Luftfeder nicht absolut linear ist. Dies gilt insbesondere für Kolben von Luftfedern, deren Form bzw. Kontur von der Form bzw. Kontur eines Zylinders abweicht. So sind auch Luftfedern mit Kolben mit konischem oder tailliertem Querschnitt bekannt.

Diese beiden Umstände können zu einem systematischen Fehler bei der Bestimmung der Tragkräfte der Luftfedern und der daraus ermittelten Beladung des gesamten Fahrzeugs führen.

Die WO 2016/072843 A1, die den Oberbegriff des Anspruchs 1 offenbart, beschreibt eine Radaufhängung, die einen Sensor umfasst, der zur Messung einer mechanischen Größe geeignet ist, sowie ein Verfahren zur Bestimmung einer mechanischen Größe in einer Radaufhängung. Die zu ermittelnde mechanische Größe kann eine relative mechanische Belastung zwischen zwei Komponenten der Radaufhängung sein, beispielsweise eine Relativkraft, eine Spannung oder ein Kraftmoment. Der Sensor ist dabei mechanisch mit den beiden Bauteilen verbunden, so dass die relative mechanische Belastung durch Messung der mechanischen Größe mittels des Sensors ermittelt werden kann.

Die EP 3 835 613 A1, die Stand der Technik gemäß Artikel 54(3) EPÜ ist, beschreibt eine Gummifeder mit einem integrierten Traglastsensor, welche als eine Zusatzfeder an einem Federsystem eines Fahrzeugs ausgebildet und angeordnet ist. Der Traglastsensor ist als ein folienartiger dielektrischer Elastomer-Sensor ausgebildet.

Die EP 3 505 418 A1 beschreibt eine Schienenfahrzeugfederung mit einer Luftfeder, angeordnet zwischen gefederter Masse und ungefederter Masse, nämlich zwischen Karosserie bzw. Wagenkasten und Fahrwerk bzw. Fahrschemel eines Schienenfahrzeugs, wobei eine Felge oder Gleitplatte einerseits und eine Oberplatte andererseits zusammenwirkende Teile eines Sensors oder Sensorsystems ausbilden, die abhängig vom Abstand zwischen der Felge oder Gleitplatte und der Oberplatte ein elektrisches Signal erzeugen.

Die DE 10 2012 108 684 A1 beschreibt ein Verfahren zur Steuerung eines mehrere Luftfedern aufweisenden Luftfedersystems für Fahrzeuge, bei dem für den Betriebszustand der jeweiligen Luftfeder repräsentative Parameter über Sensoren ermittelt und als Signale an ein zentrales Steuergerät geleitet werden, welches die Aktoren des Luftfedersystems bzw. der Luftfedern abhängig von den ausgewerteten Signalen steuert, wobei die Sensoren an den Luftfedern angeordnet sind und die Signale über den Sensoren zugeordnete Funksender, vorzugsweise UHF-Sender, an das einen Empfänger aufweisende Steuergerät gesendet werden.

Eine Aufgabe der vorliegenden Erfindung ist es, eine Luftfeder der eingangs beschriebenen Art bereit zu stellen, so dass die auf die Luftfeder wirkenden Kräfte genauer, einfacher, verlässlicher und bzw. oder kostengünstiger sensorisch erfasst werden können. Dies soll insbesondere für Luftfedern von Fahrzeugen, insbesondere von Lastkraftwagen, erfolgen. Zumindest soll eine Alternative zu bekannten derartigen Luftfedern geschaffen werden.

Die Aufgabe wird erfindungsgemäß durch eine Luftfederanordnung mit den Merkmalen gemäß Patentanspruch 1 sowie durch ein Fahrzeug mit den Merkmalen gemäß Patentanspruch 12 gelöst. Vorteilhafte Weiterbildungen sind in den Unteransprüchen beschrieben.

Somit betrifft die vorliegende Erfindung eine Luftfederanordnung mit wenigstens einer Luftfeder mit einem ersten Verbindungselement, welches ausgebildet ist, mit einem ersten Körper verbunden zu werden, mit einem zweiten Verbindungselement, welches ausgebildet ist, mit einem zweiten Körper verbunden zu werden, und mit einem Balg, welcher zwischen dem ersten Verbindungselement und dem zweiten Verbindungselement entlang einer Längsachse angeordnet ist und einen luftgefüllten Innenraum luftdicht umschließt. Eine derartige Luftfeder ist bekannt, wie eingangs beschrieben.

Wenigstens das erste Verbindungselement weist dem Balg entlang der Längsachse abgewandt wenigstens einen Kraftsensor auf, welcher ausgebildet ist, wenigstens eine Axialkraft und wenigstens eine Querkraft gegenüber dem ersten Körper nach Betrag und Richtung zu erfassen, ferner mit wenigstens einer Recheneinheit, welche ausgebildet ist, aus den erfassten Kräften eine resultierende Tragkraft der Luftfeder zu bestimmen. Mit anderen Worten können erfindungsgemäß Kräfte, welche senkrecht bzw. in der Normalenrichtung auf den Kraftsensor wirken, von diesem erfasst werden. Aus diesen sensorisch erfassten Kräften können dann deren Anteile in der Normalenrichtung sowie winkelig zur Normalenrichtung und als Axialkraft und Querkraft nach Betrag und Richtung bestimmt werden. Aus der Axialkraft und Querkraft, betrachtet in den Koordinaten des Kraftsensors, kann dann die Tragkraft der Luftfeder entlang der Längsachse der Luftfeder bestimmt werden.

Auf diese Art und Weise können entlang der Längsachse sowie winkelig zur Längsachse auftretenden Kräfte sensorisch von dem Kraftsensor erfasst werden. Diese sensorisch erfassten Kräfte können zum einen direkt als Axialkraft ausgewertet und zum anderen in Momente umgerechnet werden, um die Querkraft zu bestimmen. Hierdurch kann eine Krafteinwirkung mittels des Kraftsensors erfasst und zur weiteren Auswertung zur Verfügung gestellt werden, welche nicht direkt entlang der Längsachse wirken kann. Dies kann zu einer genaueren Bestimmung der tatsächlichen Tragkraft führen, welche auf die Luftfeder wirkt. Diese Tragkraft kann dann beispielsweise zur Bestimmung einer Beladung eines Fahrzeugs verwendet werden.

Erfindungsgemäß weist der Kraftsensor eine Mehrzahl von Kraftsensorelementen, vorzugsweise wenigstens sieben Kraftsensorelemente, auf, welche gegenüber dem ersten Verbindungselement flächig angeordnet sind, ferner mit wenigstens einer Messeinheit, welche ausgebildet ist, Messwerte wenigstens einer physikalischen Größe jedes Kraftsensorelementes zu erfassen, wobei die Recheneinheit ferner ausgebildet ist, die erfassten Messwerte von der Messeinheit zu erhalten und aus den erfassten Messwerten aller Kraftsensorelemente die Axialkraft und die Querkraft des Kraftsensors nach Betrag und Richtung zu bestimmen. Dies kann eine Umsetzung der zuvor beschriebenen Bestimmung der Axialkraft und der Querkraft sowie der hieraus resultierenden Tragkraft ermöglichen. Die Verwendung einer Mehrzahl von Kraftsensorelementen kann eine besonders einfache aber dennoch wirkungsvolle Möglichkeit bieten, den zuvor beschriebenen Kraftsensor praktisch umzusetzen. Auch kann dies die Bestimmung der Richtungsabhängigkeit der einwirkenden Kräfte auf den Kraftsensor ermöglichen.

Gemäß einem weiteren Aspekt der Erfindung ist die Recheneinheit ausgebildet, die Axialkraft des Kraftsensors nach Betrag durch das Summieren der erfassten Kräfte aller Kraftsensorelemente zu bestimmen. Auf diese Art und Weise kann die Axialkraft des Kraftsensors auf einfache Art und Weise bestimmt werden, wie zuvor bereits beschrieben.

Erfindungsgemäß ist die Recheneinheit ausgebildet, die Querkraft des Kraftsensors nach Betrag und Richtung aus den Momenten der erfassten Kräfte aller Kraftsensorelemente gegenüber der Fläche des Kraftsensors zu bestimmen. Auf diese Art und Weise kann die Querkraft des Kraftsensors auf einfache Art und Weise bestimmt werden, wie zuvor bereits beschrieben.

Gemäß einem weiteren Aspekt der Erfindung ist der Kraftsensor als kapazitiver Kraftsensor ausgebildet. Dies kann eine einfache Art und Weise darstellen, den zuvor beschriebenen Kraftsensor praktisch umzusetzen. Insbesondere kann hierdurch eine sehr energieeffizient arbeitende Funktionsweise als Kraftsensor verwendet werden. Dies kann insbesondere bei einer batteriebetriebenen Umsetzung der Luftfederanordnung vorteilhaft sein.

Gemäß einem weiteren Aspekt der Erfindung weist der kapazitive Kraftsensor eine Mehrzahl von kapazitiven Kraftsensorelementen in Form von Messelektroden auf, welche entlang der Längsachse durch wenigstens ein Dielektrikum gegenüber wenigstens einer Gegenelektrode elektrisch isolierend beabstandet sind. Dies kann eine sehr einfache, kostengünstige und bzw. oder kompakte Umsetzung eines kapazitiven Kraftsensors ermöglichen.

Gemäß einem weiteren Aspekt der Erfindung sind die Messelektroden durch ein gemeinsames Dielektrikum gegenüber einer gemeinsamen Gegenelektrode elektrisch isolierend beabstandet. Mit anderen Worten sind lediglich die Meßelektroden separat ausgebildet, verwenden jedoch alle ein gemeinsames Dielektrikum gegenüber einer gemeinsamen Gegenelektrode. Dies kann die Herstellung des Kraftsensors vereinfachen. Auch kann hierdurch der Kraftsensor vergleichsweise kompakt und bzw. oder mechanisch stabil ausgebildet werden.

Gemäß einem weiteren Aspekt der Erfindung sind die Messelektroden zueinander, vorzugsweise durch Hohlräume, elektrisch isolierend beabstandet. Dies kann die Ausbildung der einzelnen Meßelektroden vereinfachen. Dabei können die einzelnen Meßelektroden zueinander durch ein Material beabstandet sein, welches elektrisch isolierend ausgebildet ist. Einfacher kann es jedoch sein, die Elektroden durch Hohlräume, welche mit Luft gefüllt sind, zueinander zu beabstanden.

Gemäß einem weiteren Aspekt der Erfindung ist der Kraftsensor zylindrisch und rotationssymmetrisch zur Längsachse ausgebildet. Dies kann die Herstellung des Kraftsensors und bzw. oder seine Montage und bzw. oder Verwendung vereinfachen. Auch kann dies die zuvor beschriebene Funktionsweise begünstigen.

Gemäß einem weiteren Aspekt der Erfindung ist die Luftfeder zylindrisch und rotationssymmetrisch zur Längsachse ausgebildet. Dies kann die Herstellung der Luftfeder sowie deren Montage und bzw. oder Verwendung vereinfachen.

Gemäß einem weiteren Aspekt der Erfindung weist die Luftfederanordnung wenigstens eine Sendeeinheit auf, welche ausgebildet ist, die bestimmte resultierende Tragkraft der Luftfeder von der Recheneinheit zu erhalten und, vorzugsweise drahtlos, an wenigstens eine Empfangseinheit auszusenden. Auf diese Art und Weise kann die resultierende Tragkraft von der Luftfederanordnung an einen Empfänger in Form einer Empfangseinheit übermittelt werden. Beispielsweise kann der Empfänger bzw. die Empfangseinheit zentral an einem Fahrzeug angeordnet sein und die Tragkraft wenigstens einer Luftfederanordnung erhalten. Die Übermittlung der Tragkraft drahtlos vorzusehen kann die Verwendung einer Verkabelung ersparen und somit den Aufwand der Umsetzung geringhalten.

Gemäß einem weiteren Aspekt der Erfindung ist das erste Verbindungselement ein Kolben und das zweite Verbindungselement eine Bördelplatte. Auf diese Art und Weise kann die sensorische Krafterfassung mittels des Kraftsensors zwischen dem Kolben der Luftfeder und dem ersten Körper als Untergrund bzw. als Auflage erfolgen. Insbesondere kann der erste Körper ein Fahrwerk eines Fahrzeugs sein.

Die Erfindung betrifft auch eine Luftfeder zur Verwendung in einer Luftfederanordnung wie zuvor beschrieben. Hierdurch kann eine Luftfeder zur Verfügung gestellt werden, um die zuvor beschriebene Luftfederanordnung zu realisieren und deren Eigenschaften und Vorteile zu nutzen.

Die Erfindung betrifft ferner ein Fahrzeug mit wenigstens einer Luftfederanordnung wie zuvor beschrieben mit wenigstens einer Recheneinheit, welche ausgebildet ist, eine Beladung des Fahrzeugs basierend auf wenigstens der resultierenden Tragkraft wenigstens einer Luftfeder wenigstens der Luftfederanordnung zu bestimmen. Entsprechend kann die zur vorbeschriebene Luftfederanordnung dazu verwendet werden, die Beladung eines Fahrzeugs zu bestimmen. Vorzugsweise können hierzu mehrere erfindungsgemäße Luftfederanordnungen verwendet werden, welche an verschiedenen Stellen des Fahrzeugs z. B. zwischen dessen Ladefläche und z. B. dessen Fahrwerk angeordnet sind. Hierbei kann es besonders vorteilhaft sein, vier derartige Luftfederanordnungen zu verwenden, welche vorzugsweise an oder nahe den vier Ecken z. B. der Ladefläche des Fahrzeugs angeordnet sind.

Gemäß einem Aspekt der Erfindung weist das Fahrzeug eine Empfangseinheit auf, welche ausgebildet ist, die bestimmte resultierende Tragkraft wenigstens der Luftfeder wenigstens der Luftfederanordnung, vorzugsweise drahtlos, zu erhalten. Auf diese Art und Weise kann die bestimmte Tragkraft wenigstens einer Luftfederanordnung an eine, z. B. zentrale, Recheneinheit des Fahrzeugs wie z. B. dessen Steuerungseinheit übermittelt werden. Vorzugsweise können dabei von der zentralen Recheneinheit des Fahrzeugs die bestimmten Tragkräfte mehrerer Luftfederanordnungen und vorzugsweise von vier Luftfederanordnungen empfangen und zu einer resultierenden Kraft berechnet werden, welche die Beladung des Fahrzeugs repräsentiert. Dies vorzugsweise drahtlos umzusetzen kann eine entsprechende Verkabelung vermeiden.

Mit anderen Worten kann die zuvor beschriebene Aufgabe erfindungsgemäß dadurch gelöst werden, indem die Kraft vorzugsweise im Aufstandspunkt des Kolbens nach Betrag und Richtung bestimmt wird. Zu diesem Zweck kann zwischen z. B. dem Kolbenboden und der Auflage eine Anzahl von, vorzugsweise kapazitiven, Kraftsensoren, vorzugsweise von mindestens sieben, vorzugsweise kapazitiven, Kraftsensoren, segmentweise vorzugsweise in einem Kreis um die Mittelachse des Kolbenbodens angeordnet werden.

Die Summe der gemessenen Einzelkräfte ergibt die Axialkraft, welche senkrecht auf den Kolbenboden wirkt. Aus den Momenten der Einzelkräfte um die x- bzw. y-Achse der horizontalen Ebene des Kolbenbodens bzw. radial zur Längsachse bzw. zur Normalenrichtung des Kolbenbodens lassen sich die Koordinaten des Kraftangriffspunktes berechnen, welcher idealerweise in der Mitte des Kolbenbodens liegt, jedoch bei exzentrischer Lage aufgrund von Verkippung und Neigung des Kolbens gegenüber dessen Auflage hiervon abweichen kann.

Die bei einer exzentrischen Lage des Angriffspunktes entstehenden Querkräfte tangential zu dem Kolbenboden, welche von der Reibkraft zwischen dem Kolbenboden und seiner Auflage kompensiert werden, lassen sich mithilfe der Koordinaten des Angriffspunktes der Summenkraft berechnen. Die Tragkraft kann sich aus der vektoriellen Addition der gemessenen Axial- bzw. Vertikalkraft und der berechneten Querkraft bestimmt werden.

Mit Hilfe der vorzugsweisen segmentweisen Anordnung der Kraftsensorelemente des Kraftsensors können unsymmetrische Kraftverteilungen in der Aufstandsfläche der Luftfeder erkannt und bestimmt bzw. gemessen werden. Die vorzugsweise Verwendung von kapazitiven Kraftsensorelementen kann den besonderen Vorteil bieten, dass die Messanordnung sehr energieeffizient arbeiten kann. Dies kann einen batteriegestützten Betrieb mit einer Funk-Schnittstelle für die Übertragung der Messdaten ermöglichen bzw. begünstigen.

Ein Ausführungsbeispiel und weitere Vorteile der Erfindung werden nachstehend im Zusammenhang mit den folgenden schematischen Figuren erläutert. Darin zeigt:
- Fig. 1: einen Querschnitt durch eine erfindungsgemäße Luftfeder;
- Fig. 2: eine Draufsicht entlang der Längsachse von oben auf einen Kraftsensor;
- Fig. 3: einen Querschnitt durch die Darstellung der Fig. 2;
- Fig. 4: eine Teilansicht einer erfindungsgemäßen Luftfederanordnung;
- Fig. 5: eine Teilansicht der erfindungsgemäßen Luftfeder in exzentrischer Lage; und
- Fig. 6: eine Draufsicht auf ein erfindungsgemäßes Fahrzeug.

Die Beschreibung der o.g. Figuren erfolgt in zylindrischen Koordinaten mit einer Längsachse X, einer zur Längsachse X senkrecht ausgerichteten radialen Richtung R sowie einer um die Längsachse X umlaufenden Umfangsrichtung U. Die Längsachse X kann auch als Mittelachse X bezeichnet werden.

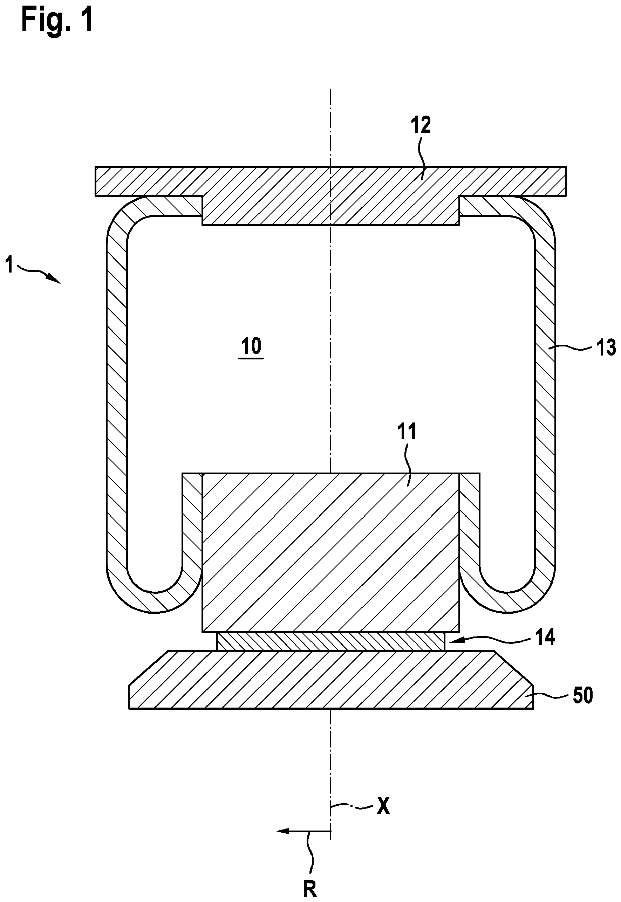

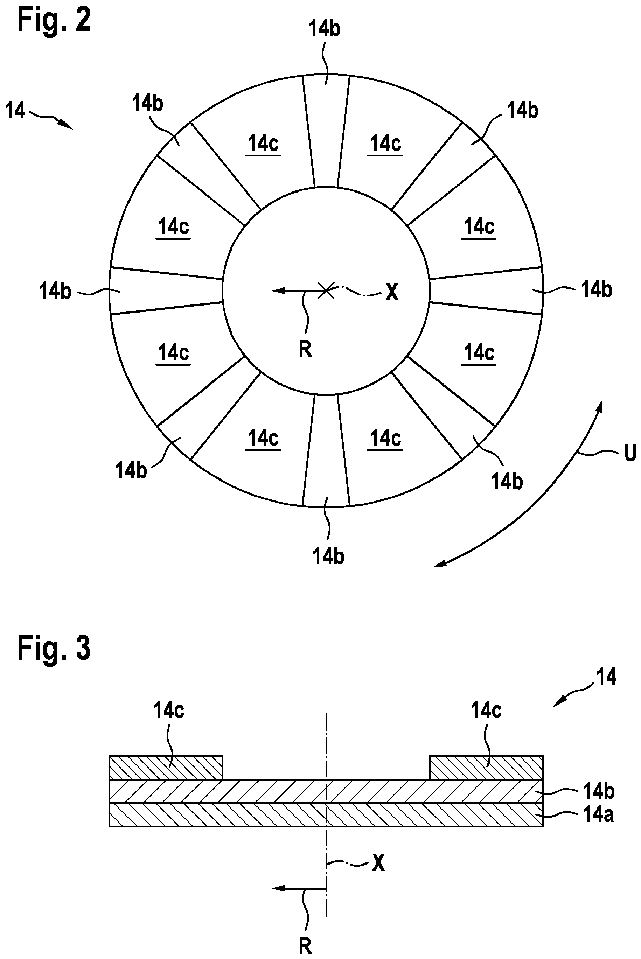

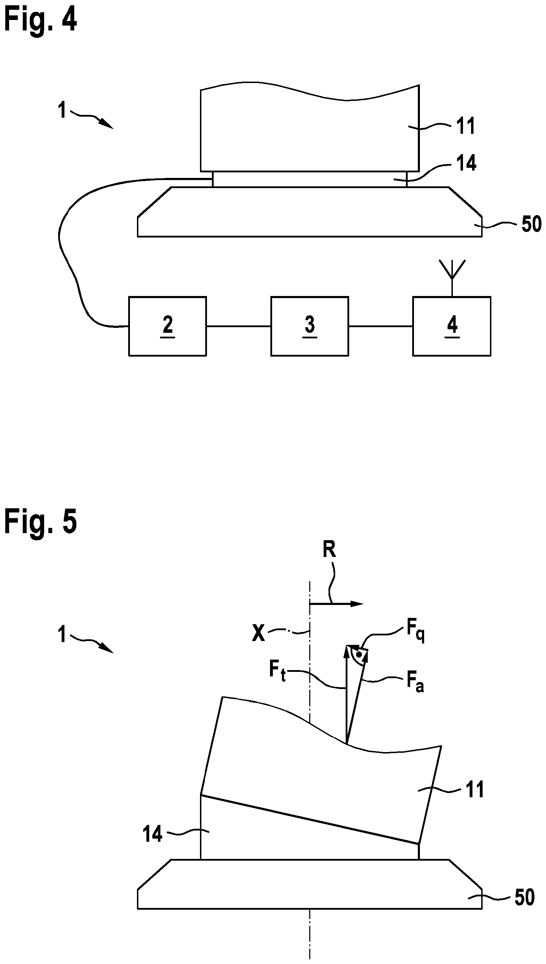

Fig. 1 zeigt einen Querschnitt durch eine erfindungsgemäße Luftfeder 1. Fig. 2 zeigt eine Draufsicht entlang der Längsachse X von oben auf einen Kraftsensor 14. Fig. 3 zeigt einen Querschnitt durch die Darstellung der Fig. 2. Fig. 4 zeigt eine Teilansicht einer erfindungsgemäßen Luftfederanordnung 1, 2, 3, 4. Fig. 5 zeigt eine Teilansicht der erfindungsgemäßen Luftfeder 1 in exzentrischer Lage.

Eine erfindungsgemäße Luftfeder 1 weist ein erstes, unteres Verbindungselement 11 auf, welches von einem Kolben 11 gebildet wird. Entlang der Längsachse X oberhalb des Kolbens 11 ist ein zweites, oberes Verbindungselement 12 in Form einer Bördelplatte 12 angeordnet. Der Kolben 11 und die Bördelplatte 12 sind entlang der Längsachse X durch einen elastischen Balg 13 miteinander verbunden. Der Kolben 11, die Bördelplatte 12 und der Balg 13 schließen gemeinsam ein Luftvolumen innerhalb eines Innenraums 10 ein, welches federnd dämpfend entlang der Längsachse X wirken kann. Hierdurch wird die federelastische Wirkung der Luftfeder 1 entlang im Wesentlichen der Längsachse X zwischen dem Kolben 11 und der Bördelplatte 12 erreicht.

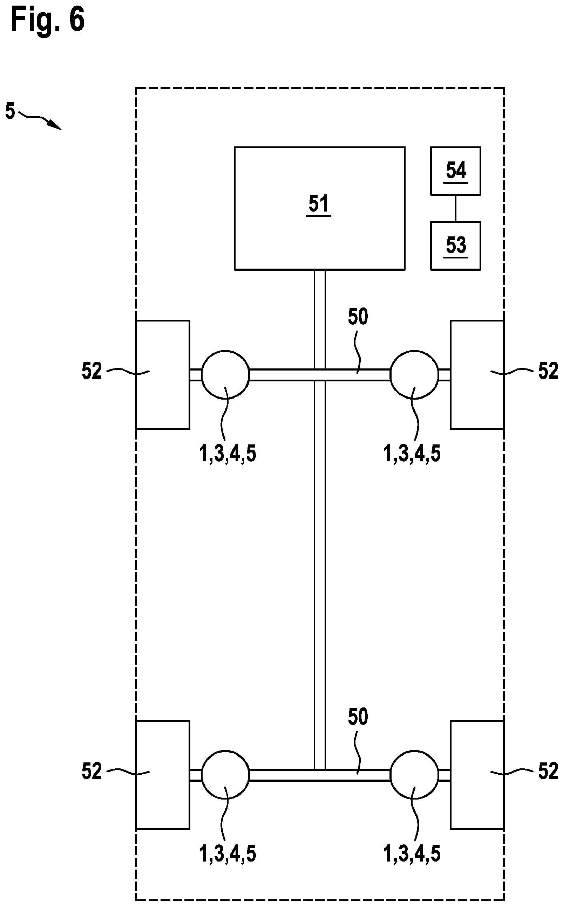

Die Luftfeder 1 ist mittels ihres Kolbens 11 entlang der Längsachse X nach unten an einem ersten Körper 50 feststehend montiert. Der erste Körper 50 dient als Auflage 50 der Luftfeder 1 und stellt im betrachteten Fall ein Fahrwerk 50 eines Fahrzeugs 5 dar, vgl. Figur 6. Entlang der Längsachse X nach oben ist die Bördelplatte 12 feststehend an einem zweiten Körper (nicht dargestellt) angeordnet. Der zweite Körper kann im betrachteten Ausführungsbeispiel ein Bestandteil eines Chassis oder einer Ladefläche des Fahrzeugs 5 sein.

Erfindungsgemäß ist entlang der Längsachse X zwischen dem Fahrwerk 50 und dem Kolben 11 ein Kraftsensor 14 in Form eines kapazitiven Kraftsensors 14 flächig angeordnet, vgl. Figur 1. Mittels des kapazitiven Kraftsensors 14 können Kräfte sensorisch erfasst werden, welche entlang der Normalenrichtung des kapazitiven Kraftsensors 14 gegenüber dem Fahrwerk 50 wirken können. Dabei enspricht die Normalenrichtung des kapazitiven Kraftsensors 14 üblicherweise der Längsachse X der Luftfeder 1. Bei einer exzentrischen Lage der Bördelplatte 12 gegenüber dem Fahrwerk 50 kann die Normalenrichtung des kapazitiven Kraftsensors 14 jedoch auch winkelig zur Längsachse X der Luftfeder 1 ausgerichtet sein.

Aus den sensorisch erfassten Kräften kann zum einen durch Summieren der in der Normalenrichtung des kapazitiven Kraftsensors 14 wirkenden Kräfte eine resultierende Axialkraft Fa bestimmt werden. Ebenfalls kann über die Momente der in der Normalenrichtung des kapazitiven Kraftsensors 14 wirkenden Kräfte auch eine Querkraft Fq bestimmt werden. Aus der Axialkraft Fa und der Querkraft Fq kann dann eine resultierende Tragkraft Ft entlang der Längsachse X bestimmt werden. Hierdurch ist es erfindungsgemäß möglich, auch bei einer exzentrischen Ausrichtung des kapazitiven Kraftsensors 14 gegenüber dem Fahrwerk 50 bzw. gegenüber der Längachse X die tatsächlich in der vertikalen Richtung als Längsachse X gegenüber dem Fahrwerk 50 wirkende Tragkraft Ft zu bestimmen. Die erfindungsgemäß bestimmte Tragkraft Ft kann, insbesondere in Kombination mehrerer erfindungsgemäßer Luftfederanordnungen 1, 2, 3, 4 des Fahrzeugs 5, zur Bestimmung der Beladung des Fahrzeugs 5 verwendet werden.

Der kapazitive Kraftsensor 14 besteht hierzu aus einer Gegenelektrode 14a, welche flächig ringförmig ausgebildet und zu dem Fahrwerk 50 hin angeordnet ist, vgl. Figuren 2 und 3. Dem Fahrwerk 50 abgewandt ist ein ringförmiges Dielektrikum 14b auf der Gegenelektrode 14a angeordnet. Der Gegenelektrode 14a abgewandt ist auf dem Dielektrikum 14b eine Mehrzahl von kapazitiven Kraftsensorelementen 14c angeordnet, welche in der Umfangsrichtung U durch luftgefüllte Zwischenräume zueinander beabstandet sind. Die kapazitiven Kraftsensorelementen 14c können auch als Meßelektroden 14c bezeichnet werden. Die Gegenelektrode 14a, das Dielektrikum 14b und die Meßelektroden 14c sind dabei entlang der Normalenrichtung des Kraftsensors 14 angeordnet.

In der Darstellung der Fig. 2 wird dabei beispielhaft ein kapazitiver Kraftsensor 14 mit acht kapazitiven Kraftsensorelemente 14c verwendet, welche jeweils als Plattenkondensator zusammen mit der gemeinsamen Gegenelektrode 14a und dem gemeinsamen Dielektrikum 14b ausgeführt sind. Auf einer gemeinsamen metallischen Grundplatte 14a, welche als die gemeinsame Gegenelektrode 14a fungiert, befindet sich das gemeinsame Dielektrikum 14b aus einem Material mit einem bekannten Kraft-Dehnungsverhalten. Auf dem gemeinsamen Dielektrikum 14c sind die acht Messelektroden 14c des kapazitiven Kraftsensors 14 aufgebracht und in der Umfangsrichtung U zueinander beabstandet.

Eine Kraft, die in Normalrichtung des kapazitiven Kraftsensors 14 auf eine der acht Messelektroden 14c wirkt, komprimiert das Dielektrikum 14b lokal, so dass sich die Kapazität des entsprechenden Kraftsensorelements 14c erhöht. Die Änderungen der Kapazität eines jeden der kapazitiven Kraftsensorelemente 14c werden von einer hochauflösenden Messelektronik 2 als Messeinheit 2 der erfindungsgemäßen Luftfederanordnung 1, 2, 3, 4 ausgewertet, vorzugsweise in Femto-Farad.

Diese sensorischen Messwerte, welche Kräfte repräsentieren, werden von der Messeinheit 2 an eine Recheneinheit 3 der erfindungsgemäßen Luftfederanordnung 1, 2, 3, 4 übermittelt, welche aus den sensorisch erfassten Kräfte, jeweils entlang der Normalenrichtung des Kraftsensors 14 und damit bei exzentrischer Lage winkelig zur Längsachse X erfasst, die Axialkraft Fa und die Querkraft Fq bestimmt. Aus der Axialkraft Fa und der Querkraft Fq bestimmt die Recheneinheit 3 die Koordinaten des Angriffspunktes der resultierenden Tragkraft Ft entlang der Längsachse X, welche sich aus der vektoriellen Addition der gemessenen Axial- bzw. Vertikalkraft Fa und der berechneten Querkraft Fq bestimmen lässt.

Die bestimmte Tragkraft Ft wird dann jeweils von einer Sendeeinheit 4 der jeweiligen erfindungsgemäßen Luftfederanordnung 1, 2, 3, 4 drahtlos an eine Empfangseinheit 53 des Fahrzeugs 5 ausgesendet. Dort kann aus den empfangenen Tragkräften Ft aller voer erfindungsgemäßen Luftfederanordnungen 1, 2, 3, 4 des Fahrzeugs 5 dessen Beladung bestimmt werden. Auf diese Art und Weise kann jede erfindungsgemäße Luftfederanordnung 1, 2, 3, 4 als separates und autarkes System ausgebildet werden, welches beispielsweise jeweils durch einen eigenen endlichen oder wiederaufladbaren Energiespeicher in Form einer Batterie oder eines Akkus betrieben werden kann.

Fig. 6 zeigt eine Draufsicht auf ein erfindungsgemäßes Fahrzeug 5. Das Fahrzeug 5 weist, neben dem zuvor bereits erwähnten Fahrwerk 50 und der Empfangseinheit 53, ferner einen Motor 51 auf, welcher antriebskraftübertragend über Elemente des Fahrwerks 50 mit vier Rädern 52 verbunden ist. Ferner weist das Fahrzeug 5 auch eine eigene Recheneinheit 54 auf, welche signalübertragend mit der Empfangseinheit 53 verbunden ist. Seitens der Recheneinheit 54 kann aus den Tragkräften Ft aller vier erfindungsgemäßen Luftfederanordnungen 1,2, 3,4 des Fahrzeugs 5 dessen resultierende Beladung bestimmt werden.

### Bezugszeichenliste (Teil der Beschreibung)

- Fa: Axialkraft
- Fq: Querkraft
- Ft: Tragkraft

- R: radiale Richtung
- U: Umfangsrichtung
- X: Längsachse; Mittelachse

- 1: Luftfeder
- 10: Innenraum
- 11: erstes, unteres Verbindungselement; Kolben
- 12: zweites, oberes Verbindungselement; Bördelplatte
- 13: Balg
- 14: (kapazitiver) Kraftsensor
- 14a: Gegenelektrode; metallische Grundplatte
- 14b: Dielektrikum
- 14c: (kapazitive) Kraftsensorelemente; Messelektroden

- 2: Messeinheit; Messelektronik
- 3: Recheneinheit
- 4: Sendeeinheit

- 5: Fahrzeug
- 50: erster Körper; Auflage; Fahrwerk
- 51: Motor
- 52: Räder
- 53: Empfangseinheit
- 54: Recheneinheit

## Patentansprüche

1. Luftfederanordnung (1, 2, 3, 4) für ein Fahrzeug (5)
mit wenigstens einer Luftfeder (1)
mit einem ersten Verbindungselement (11), welches ausgebildet ist, mit einem ersten Körper (50) verbunden zu werden,
mit einem zweiten Verbindungselement (12), welches ausgebildet ist, mit einem zweiten Körper verbunden zu werden, und
mit einem Balg (13), welcher zwischen dem ersten Verbindungselement (11) und dem zweiten Verbindungselement (12) entlang einer Längsachse (X) angeordnet ist und einen luftgefüllten Innenraum (10) luftdicht umschließt,
wobei wenigstens das erste Verbindungselement (11) dem Balg (13) entlang der Längsachse (X) abgewandt wenigstens einen Kraftsensor (14) aufweist, welcher ausgebildet ist,
wenigstens eine Axialkraft (Fa) und
wenigstens eine Querkraft (Fq)
gegenüber dem ersten Körper (50) nach Betrag und Richtung zu erfassen, ferner mit wenigstens einer Recheneinheit (3), welche ausgebildet ist, aus den erfassten Kräften (Fa, Fq) eine resultierende Tragkraft (Ft) der Luftfeder (1) zu bestimmen,
**dadurch gekennzeichnet, dass**
der Kraftsensor (14) eine Mehrzahl von Kraftsensorelementen (14c) aufweist, welche gegenüber dem ersten Verbindungselement (11) flächig angeordnet sind,
ferner mit wenigstens einer Messeinheit (2), welche ausgebildet ist, Messwerte wenigstens einer physikalischen Größe jedes Kraftsensorelementes (14c) zu erfassen,
wobei die Recheneinheit (3) ferner ausgebildet ist, die erfassten Messwerte von der Messeinheit (2) zu erhalten und aus den erfassten Messwerten aller Kraftsensorelemente (14c) die Axialkraft (Fa) und die Querkraft (Fq) des Kraftsensors (14) nach Betrag und Richtung zu bestimmen, wobei die Recheneinheit (3) ausgebildet ist, die Querkraft (Fq) des Kraftsensors (14) nach Betrag und Richtung aus den Momenten der erfassten Kräfte aller Kraftsensorelemente (14c) gegenüber der Fläche des Kraftsensors (14) zu bestimmen.

2. Luftfederanordnung (1, 2, 3, 4) nach Anspruch 1, **dadurch gekennzeichnet, dass**
der Kraftsensor (14) wenigstens sieben Kraftsensorelemente (14c), aufweist.

3. Luftfederanordnung (1, 2, 3, 4) nach Anspruch 1 oder 2, **dadurch gekennzeichnet, dass**
die Recheneinheit (3) ausgebildet ist, die Axialkraft (Fa) des Kraftsensors (14) nach Betrag durch das Summieren der erfassten Kräfte aller Kraftsensorelemente (14c) zu bestimmen.

4. Luftfederanordnung (1, 2, 3, 4) nach einem der vorangehenden Ansprüche, **dadurch gekennzeichnet, dass**
der Kraftsensor (14) als kapazitiver Kraftsensor (14) ausgebildet ist.

5. Luftfederanordnung (1, 2, 3, 4) nach Anspruch 4, **dadurch gekennzeichnet, dass**
der kapazitive Kraftsensor (14) eine Mehrzahl von kapazitiven Kraftsensorelementen (14c) in Form von Messelektroden (14c) aufweist, welche entlang der Längsachse (X) durch wenigstens ein Dielektrikum (14b) gegenüber wenigstens einer Gegenelektrode (14a) elektrisch isolierend beabstandet sind.

6. Luftfederanordnung (1, 2, 3, 4) nach Anspruch 5, **dadurch gekennzeichnet, dass**
die Messelektroden (14c) durch ein gemeinsames Dielektrikum (14b) gegenüber einer gemeinsamen Gegenelektrode (14a) elektrisch isolierend beabstandet sind.

7. Luftfederanordnung (1, 2, 3, 4) nach Anspruch 5 oder 6, **dadurch gekennzeichnet, dass**
die Messelektroden (14c) zueinander, vorzugsweise durch Hohlräume, elektrisch isolierend beabstandet sind.

8. Luftfederanordnung (1, 2, 3, 4) nach einem der vorangehenden Ansprüche, **dadurch gekennzeichnet, dass**
der Kraftsensor (14) zylindrisch und rotationssymmetrisch zur Längsachse (X) ausgebildet ist.

9. Luftfederanordnung (1, 2, 3, 4) nach einem der vorangehenden Ansprüche, **dadurch gekennzeichnet, dass**
die Luftfeder (1) zylindrisch und rotationssymmetrisch zur Längsachse (X) ausgebildet ist.

10. Luftfederanordnung (1, 2, 3, 4) nach einem der vorangehenden Ansprüche, **gekennzeichnet durch**
wenigstens eine Sendeeinheit (4), welche ausgebildet ist, die bestimmte resultierende Tragkraft (Ft) der Luftfeder (1) von der Recheneinheit (3) zu erhalten und, vorzugsweise drahtlos, an wenigstens eine Empfangseinheit (53) auszusenden.

11. Luftfederanordnung (1, 2, 3, 4) nach einem der vorangehenden Ansprüche,
**dadurch gekennzeichnet, dass**
das erste Verbindungselement (11) ein Kolben (11) und
das zweite Verbindungselement (12) eine Bördelplatte (12) ist.

12. Fahrzeug (5)
mit wenigstens einer Luftfederanordnung (1, 2, 3, 4) nach einem der Ansprüche 1 bis 11 und
mit wenigstens einer Recheneinheit (54), welche ausgebildet ist, eine Beladung des Fahrzeugs (5) basierend auf wenigstens der resultierenden Tragkraft (Ft) wenigstens einer Luftfeder (1) wenigstens der Luftfederanordnung (1, 2, 3, 4) zu bestimmen.

13. Fahrzeug (5) nach Anspruch 12, **gekennzeichnet durch**
eine Empfangseinheit (53), welche ausgebildet ist, die bestimmte resultierende Tragkraft (Ft) wenigstens der Luftfeder (1) wenigstens der Luftfederanordnung (1, 2, 3, 4), vorzugsweise drahtlos, zu erhalten.

## Claims

1. Air spring arrangement (1, 2, 3, 4) for a vehicle (5),
having at least one air spring (1)
with a first connecting element (11) which is designed to be connected to a first body (50),
with a second connecting element (12) which is designed to be connected to a second body, and
with a bellows (13) which is arranged between the first connecting element (11) and the second connecting element (12) along a longitudinal axis (X) and encloses an air-filled interior (10) in an air-tight manner,
wherein at least the first connecting element (11) has at least one force sensor (14) averted from the bellows (13) along the longitudinal axis (X), which force sensor is designed to detect the magnitude and the direction of
at least one axial force (Fa) and
at least one transverse force (Fq)
in relation to the first body (50),
further having at least one computer unit (3) which is designed to determine a resulting load-bearing force (Ft) of the air spring (1) from the detected forces (Fa, Fq),
**characterized in that**
the force sensor (14) has a plurality of force sensor elements (14c) which are arranged flat in relation to the first connecting element (11),
further having at least one measuring unit (2) which is designed to detect measurement values of at least one physical variable of each force sensor element (14c),
wherein the computer unit (3) is further designed to obtain the detected measurement values from the measuring unit (2) and to determine the magnitude and the direction of the axial force (Fa) and the transverse force (Fq) of the force sensor (14) from the detected measurement values of all of the force sensor elements (14c), wherein the computer unit (3) is designed to determine the magnitude and the direction of the transverse force (Fq) of the force sensor (14) from the torques of the detected forces of all of the force sensor elements (14c) in relation to the area of the force sensor (14).

2. Air spring arrangement (1, 2, 3, 4) according to Claim 1, **characterized in that** the force sensor (14) has at least seven force sensor elements (14c).

3. Air spring arrangement (1, 2, 3, 4) according to Claim 1 or 2, **characterized in that**
the computer unit (3) is designed to determine the magnitude of the axial force (Fa) of the force sensor (14) by summing the detected forces of all of the force sensor elements (14c).

4. Air spring arrangement (1, 2, 3, 4) according to one of the preceding claims, **characterized in that**
the force sensor (14) is in the form of a capacitive force sensor (14).

5. Air spring arrangement (1, 2, 3, 4) according to Claim 4, **characterized in that** the capacitive force sensor (14) has a plurality of capacitive force sensor elements (14c) in the form of measurement electrodes (14c) which are spaced apart in an electrically insulating manner in relation to at least one mating electrode (14a) along the longitudinal axis (X) by at least one dielectric (14b).

6. Air spring arrangement (1, 2, 3, 4) according to Claim 5, **characterized in that** the measurement electrodes (14c) are spaced apart in an electrically insulating manner in relation to a common mating electrode (14a) by a common dielectric (14b).

7. Air spring arrangement (1, 2, 3, 4) according to Claim 5 or 6, **characterized in that**
the measurement electrodes (14c) are spaced apart from one another in an electrically insulating manner, preferably by cavities.

8. Air spring arrangement (1, 2, 3, 4) according to one of the preceding claims, **characterized in that**
the force sensor (14) is cylindrical and rotationally symmetrical with respect to the longitudinal axis (X).

9. Air spring arrangement (1, 2, 3, 4) according to one of the preceding claims, **characterized in that**
the air spring (1) is cylindrical and rotationally symmetrical with respect to the longitudinal axis (X).

10. Air spring arrangement (1, 2, 3, 4) according to one of the preceding claims, **characterized by**
at least one transmitting unit (4) which is designed to obtain the specific resulting load-bearing force (Ft) of the air spring (1) from the computer unit (3), and to send it, preferably in a wireless manner, to at least one receiving unit (53).

11. Air spring arrangement (1, 2, 3, 4) according to one of the preceding claims, **characterized in that**
the first connecting element (11) is a piston (11) and the second connecting element (12) is a flanged plate (12).

12. Vehicle (5)
having at least one air spring arrangement (1, 2, 3, 4) according to one of Claims 1 to 11, and
having at least one computer unit (54) which is designed to determine a loading of the vehicle (5) based on at least the resulting load-bearing force (Ft) at least of an air spring (1) at least of the air spring arrangement (1, 2, 3, 4).

13. Vehicle (5) according to Claim 12, **characterized by**
a receiving unit (53) which is designed to obtain the specific resulting load-bearing force (Ft) at least of the air spring (1) at least of the air spring arrangement (1, 2, 3, 4), preferably in a wireless manner.

## Revendications

1. Agencement de ressort pneumatique (1, 2, 3, 4) pour un véhicule (5),
comprenant au moins un ressort pneumatique (1) pourvu
d'un premier élément de liaison (11) qui est réalisé pour être relié à un premier corps (50),
d'un deuxième élément de liaison (12) qui est réalisé pour être relié à un deuxième corps, et
d'un soufflet (13) qui est disposé entre le premier élément de liaison (11) et le deuxième élément de liaison (12) le long d'un axe longitudinal (X) et entoure de manière étanche à l'air un espace intérieur (10) rempli d'air,
dans lequel au moins le premier élément de liaison (11) présente au moins un capteur de force (14), détourné du soufflet (13) le long de l'axe longitudinal (X), qui est réalisé pour détecter
au moins une force axiale (Fa), et
au moins une force transversale (Fq)
par rapport au premier corps (50) concernant le montant et la direction,
comprenant en outre au moins une unité de calcul (3) qui est réalisée pour déterminer à partir des forces détectées (Fa, Fq) une force portante résultante (Ft) du ressort pneumatique (1),
**caractérisé en ce que** le capteur de force (14) présente une pluralité d'éléments de capteur de force (14c) qui sont disposés en nappe par rapport au premier élément de liaison (11),
comprenant en outre au moins une unité de mesure (2) qui est réalisée pour détecter des valeurs de mesure d'au moins une grandeur physique de chaque élément de capteur de force (14c),
dans lequel l'unité de calcul (3) est en outre réalisée pour obtenir les valeurs de mesure détectées de l'unité de mesure (2) et pour déterminer à partir des valeurs de mesure détectées de tous les éléments de capteur de force (14c) la force axiale (Fa) et la force transversale (Fq) du capteur de force (14) concernant le montant et la direction, l'unité de calcul (3) étant réalisée pour déterminer la force transversale (Fq) du capteur de force (14) concernant le montant et la direction à partir des moments des forces détectées de tous les éléments de capteur de force (14c) par rapport à la surface du capteur de force (14).

2. Agencement de ressort pneumatique (1, 2, 3, 4) selon la revendication 1, **caractérisé en ce que** le capteur de force (14) présente au moins sept éléments de capteur de force (14c).

3. Agencement de ressort pneumatique (1, 2, 3, 4) selon la revendication 1 ou 2, **caractérisé en ce que** l'unité de calcul (3) est réalisée pour déterminer la force axiale (Fa) du capteur de force (14) concernant le montant en additionnant les forces détectées de tous les éléments de capteur de force (14c).

4. Agencement de ressort pneumatique (1, 2, 3, 4) selon l'une quelconque des revendications précédentes, **caractérisé en ce que** le capteur de force (14) est réalisé comme un capteur de force (14) capacitif.

5. Agencement de ressort pneumatique (1, 2, 3, 4) selon la revendication 4, **caractérisé en ce que** le capteur de force (14) capacitif présente une pluralité d'éléments de capteur de force capacitifs (14c) sous la forme d'électrodes de mesure (14c) qui sont espacées de manière électriquement isolante le long de l'axe longitudinal (X) par au moins un diélectrique (14b) par rapport à au moins une contre-électrode (14a).

6. Agencement de ressort pneumatique (1, 2, 3, 4) selon la revendication 5, **caractérisé en ce que** les électrodes de mesure (14c) sont espacées de manière électriquement isolante par un diélectrique (14b) commun par rapport à une contre-électrode (14a) commune.

7. Agencement de ressort pneumatique (1, 2, 3, 4) selon la revendication 5 ou 6, **caractérisé en ce que** les électrodes de mesure (14c) sont espacées les unes par rapport aux autres de manière électriquement isolante, de préférence par des cavités.

8. Agencement de ressort pneumatique (1, 2, 3, 4) selon l'une quelconque des revendications précédentes, **caractérisé en ce que** le capteur de force (14) est réalisé de manière cylindrique et en symétrie de révolution par rapport à l'axe longitudinal (X).

9. Agencement de ressort pneumatique (1, 2, 3, 4) selon l'une quelconque des revendications précédentes, **caractérisé en ce que** le ressort pneumatique (1) est réalisé de manière cylindrique et en symétrie de révolution par rapport à l'axe longitudinal (X).

10. Agencement de ressort pneumatique (1, 2, 3, 4) selon l'une quelconque des revendications précédentes, **caractérisé par** au moins une unité d'émission (4) qui est réalisée pour obtenir de l'unité de calcul (3) la force portante résultante (Ft) déterminée du ressort pneumatique (1), et pour l'émettre à au moins une unité de réception (53), de préférence sans fil.

11. Agencement de ressort pneumatique (1, 2, 3, 4) selon l'une quelconque des revendications précédentes, **caractérisé en ce que** le premier élément de liaison (11) est un piston (11) et le deuxième élément de liaison (12) est une plaque sertie (12).

12. Véhicule (5) comprenant
au moins un agencement de ressort pneumatique (1, 2, 3, 4) selon l'une quelconque des revendications 1 à 11, et
au moins une unité de calcul (54) qui est réalisée pour déterminer une charge du véhicule (5) sur la base au moins de la force portante résultante (Ft) au moins d'un ressort pneumatique (1) au moins de l'agencement de ressort pneumatique (1, 2, 3, 4).

13. Véhicule (5) selon la revendication 12, **caractérisé par** une unité de réception (53) qui est réalisée pour obtenir la force portante résultante (Ft) déterminée au moins du ressort pneumatique (1) au moins de l'agencement de ressort pneumatique (1, 2, 3, 4), de préférence sans fil.
